(19) Europäisches Patentamt
European Patent Office
Office européen des brevets

(11) **EP 4 435 739 A1**

(12) **EUROPEAN PATENT APPLICATION**

(43) Date of publication:
**25.09.2024 Bulletin 2024/39**

(21) Application number: **23163470.0**

(22) Date of filing: **22.03.2023**

(51) International Patent Classification (IPC):
*G06V 20/56* *(2022.01)*

(52) Cooperative Patent Classification (CPC):
**G06V 20/56**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Volvo Car Corporation**
**405 31 Göteborg (SE)**

(72) Inventors:
• **KARUNASEKERA, Hasith**
  **40531 Göteborg (SE)**

• **YANG, Derong**
  **40531 Göteborg (SE)**
• **GAWANDE, Saurabh**
  **40531 Göteborg (SE)**
• **SJÖBERG, Jonas**
  **40531 Göteborg (SE)**

(74) Representative: **Maiwald GmbH**
**Engineering**
**Elisenhof**
**Elisenstrasse 3**
**80335 München (DE)**

(54) **METHOD AND SYSTEM FOR ASSOCIATING ENVIRONMENT PERCEPTION DATA WITH DATA INDICATIVE OF A FRICTION CONDITION, COMPUTER PROGRAM, COMPUTER-READABLE STORAGE MEDIUM, DATA PROCESSING APPARATUS, VEHICLE, ENVIRONMENT PERCEPTION DATA AND USE THEREOF**

(57) The disclosure relates to a method for associating environment perception data (R) of a first vehicle (10) with data indicative of a friction condition (F). The method comprises receiving the environment perception data (R), position data, and data indicative of a friction condition (F) from a second sensor (20) being associated with the first vehicle (10). A first position (22) is transformed in a coordinate system being centered on the first sensor (14) using coordinate transformation based on the position data. Moreover, the first position (22) is mapped onto at least one corresponding element of the environment perception data (R) and the at least one element is associated with the data indicative of a friction condition (F). Furthermore, a computer program (32), a computer-readable storage medium (30), and data processing apparatus (24) are explained. Additionally, a system (12) for associating environment perception data (R) of a first vehicle (10) with data indicative of a friction condition (F), a vehicle (10), associated environment perception data (R) and a use of associated environment perception data (R) are described.

EP 4 435 739 A1

Fig. 1

## Description

The present disclosure relates to a method for associating environment perception data of a first vehicle with data indicative of a friction condition.

The present disclosure additionally is directed to a corresponding computer program, a corresponding computer-readable storage medium, and a corresponding data processing apparatus.

Furthermore, the present disclosure relates to a system for associating environment perception data of a first vehicle with data indicative of a friction condition, and a vehicle.

Moreover, the present disclosure is directed to associated environment perception data and a use of associated environment perception data as training data or ground truth data for a machine learning unit or an artificial intelligence unit.

In this context, associated environment perception data is understood as environment perception data that has already been associated with a further information. For example, the environment perception data may be annotated with a further information.

For the operation of both autonomous and non-autonomous vehicles it is important to have information about the friction of the roadway lying ahead of the vehicle. In a non-autonomous vehicle, the driver estimates this friction. In fully or partially autonomous vehicles, this needs to be done by a sensor. If the friction lying ahead of the vehicle is of interest, the sensor may be forward-facing with respect to the traveling direction of the vehicle.

The forward-facing sensor may be called a forward-facing environment perception sensor since such a sensor perceives the environment of the vehicle to which the roadway belongs.

Such a sensor may comprise an optical camera unit or a lidar unit being SE:TOP communicatively connected to a corresponding control unit which may run an artificial intelligence or a machine learning method. It is generally known that environment perception sensors using artificial intelligence and/or machine learning need to be thoroughly trained in order to provide reliable and accurate environment perception data.

In the context of data indicative of a friction condition, it has been found that suitable training data is either not available or of low quality.

Consequently, it is an objective of the present disclosure to provide a solution for rendering available training data of high quality being suitable for training environment detection sensors with respect to the detection or estimation of data indicative of a friction condition.

The problem is at least partially solved or alleviated by the subject matter of the independent claims of the present disclosure, wherein further examples are incorporated in the dependent claims.

According to a first aspect, there is provided a method for associating environment perception data of a first vehicle with data indicative of a friction condition. The environment perception data represent at least a portion of a roadway. The method comprises:

- receiving the environment perception data,
- receiving position data describing a position of the first vehicle on the roadway,
- receiving data indicative of a friction condition from a second sensor being associated with the first vehicle, wherein the data indicative of a friction condition relates to a first position,
- transforming the first position in a coordinate system being centered on the first sensor using coordinate transformation based on the position data describing the position of the first vehicle,
- mapping the first position onto at least one corresponding element of the environment perception data, and associating the at least one element with the data indicative of a friction condition relating to the first position.

Consequently, using the method according to the present disclosure, environment perception data may be associated with data indicative of a friction condition. The association relies on received environment perception data, position data and data indicative of a friction condition from a second sensor. The second sensor may be a friction sensor. The position data may describe a global position. All of these input parameters of the method may be generated automatically. Consequently, these input parameters may be rendered available in a high quantity and high quality. This means that a comparatively big amount of these input parameters may be generated with a comparatively low effort. At the same time, the input parameters are comparatively accurate. Based on these input parameters, the association relies on coordinate transformation and mapping. In this context, mapping describes the transformation of an information from a coordinate system which is centered on the first sensor into coordinates of the environment perception data, e.g. image coordinates. Such a coordinate transformation and mapping may be performed automatically and with high precision. Moreover, the coordinate transformation and mapping allow to use data indicative of a friction condition and environment perception data which are received or generated at the same time, but relate to different positions. Consequently, a high volume of associated environment perception data may be provided, wherein data indicative of a friction condition is associated to the environment perception data and the association is of high quality.

In the present disclosure, data can be either only one parameter or several parameters.

Moreover, in the present context, associated environment perception data is understood as environment perception data that has been associated with data indicative of a friction condition.

The associated environment perception data may be used as training data or ground truth data.

In an example, the first sensor is an environment perception sensor. The first sensor may be forward-facing.

An alternative term for associating environment perception data with data indicative of a friction condition is annotating environment perception data with data indicative of a friction condition. The resulting environment perception data may be called annotated environment perception data.

The first vehicle may alternatively be called a primary vehicle.

In an example, the association is done on pixel-level of the environment perception data. This means that data indicative of a friction condition is associated to one or more specific pixels of the environment perception data.

In the present disclosure, data indicative of a friction condition is any type of information that directly or indirectly describes a friction property. In an example, the data indicative of a friction condition relates to a friction coefficient being effective between a vehicle tire and the roadway. Additionally or alternatively, the data indicative of a friction condition relates to a surface condition of the roadway. Example surface conditions are dry, wet, snowy and icy.

In an example, the first sensor comprises an optical camera. The environment perception data of an optical camera may be called an image. In another example, the first sensor comprises a lidar unit. The environment perception data of the leader unit may be a point cloud. In a further example, the first sensor comprises a combination of an optical camera and a lidar unit.

In the present disclosure, an optical camera is to be understood as a camera being configured to provide images in the visual spectrum of a human. Such a camera may alternatively be called a RGB camera.

In an example, the second sensor, from which the data indicative of a friction condition is received, comprises a sensor relying on a dynamic response of a wheel on the roadway. Such a wheel may be subject to a specific excitation or not. Additionally or alternatively, the second sensor may comprise an infrared optical sensor, an acoustic sensor, a tire-tread sensor, or an inertial measurement unit. It is generally known to generate data indicative of a friction condition using such sensors.

In an example, transforming the first position in a coordinate system being centered on the first sensor comprises transforming the first position in a coordinate system being centered on a position sensor of the first vehicle using coordinate transformation based on the position data describing the position of the first vehicle. This means that first, a transformation into a coordinate system being centered on the position sensor is performed. The starting point thereof may be a global coordinate system. Thereafter, a transformation from the coordinate system being centered on the position sensor into a coordinate system being centered on the first sensor is performed. This allows to associate environment perception data of the first sensor with data indicative of a friction condition being determined at the same time but for a different position. This example is especially suitable if the second sensor and the first sensor share a common support which may be the first vehicle.

In an example, the transformation from the global coordinate system into the coordinate system centered on the position sensor is performed based on at least one of a vehicle heading information, a vehicle speed information, or a vehicle steering angle information.

In another example, the transformation from the coordinate system being centered on the position sensor into the coordinate system being centered on the first sensor is based on a known distance information describing an offset between the position sensor and the first sensor with respect to all spatial directions and orientations.

In an example, the method further comprises receiving position data describing a position on the roadway of a second vehicle carrying the second sensor. The second vehicle is associated with the first vehicle. The position of the second vehicle is transformed in a coordinate system being centered on a position sensor of the first vehicle using coordinate transformation based on the position data describing the position of the second vehicle and the position data describing the position of the first vehicle. Thus, in the present example, the second sensor and the first sensor are mounted on different vehicles, i.e. the first vehicle and the second vehicle respectively. The first vehicle and the second vehicle may be mechanically coupled. In this context, the second vehicle may be a trailer being attached to the first vehicle. In another example, the first vehicle and the second vehicle are mechanical independent from one another. In this case both vehicles may be cars or trucks. Alternatively, the second vehicle may be a trailer being towed by a vehicle separate from the first vehicle. The association between the first vehicle and the second vehicle relates to the fact that the data indicative of a friction condition from the second sensor on the second vehicle is intended to be used and effectively used for associating environment perception data which are generated by the first sensor being mounted on the first vehicle. Due to the above-mentioned coordinate transformations and expressions, this may be performed in a precise and reliable manner.

The second vehicle may alternatively be called a secondary vehicle.

In an example, the method further comprises receiving environment perception data from two distinct first sensors respectively, and transforming the environment perception data of one of the two distinct first sensors in a coordinate system being centered on the respective other first sensor. In other words, the environment perception data of the two distinct first sensors are fused. Consequently, the environment may be perceived in a more reliable, more precise or otherwise enhanced manner. Since the environment perception data of the two distinct first sensors are, thus, expressed in a common coordinate system, the data indicative of a friction condition may be associated to the fused environment perception data in a precise and reliable manner using the steps as described above.

In an example, both of the two distinct first sensors are forward-facing first sensors.

In an example, the method further comprises selecting portions of the environment perception data representing a desired portion of the environment. Additionally or alternatively, the method further comprises removing elements from the received environment perception data which do not represent a portion of the roadway. In other words, only specific portions of the environment perception data may be used. This enhances the precision of the association. At the same time, computational efficiency is improved due to the reduced amount of environment perception data to be processed.

In an example, all elements of the environment perception data which do not represent a portion of the roadway are removed. In this context, elements relating to other vehicles traveling on the roadway and/or nature adjacent to the roadway are removed. Additionally, a detection range of the first sensor is set and all elements of the environment perception data not lying within the detection range are removed. An example of the detection range is 5 to 25 m ahead of the first vehicle.

In an example, the method further comprises marking a subset of the environment perception data corresponding to a portion of the roadway which has been covered by the second sensor. A field of detection of the second sensor may not cover the entire roadway or an entire width of the roadway. Rather, the field of detection of the second sensor may only relate to distinct points, lines or areas of the roadway. Marking these parts in the environment perception data allows to use the associated environment perception data with enhanced efficiency when performing a training based on the associated environment perception data.

In an example, the marked subset relates to a traveling path of a wheel forming part of a second sensor.

In an example, the method further comprises time synchronizing the position data describing the position of the first vehicle and/or the position data describing the position of the second vehicle with the received data indicative of a friction condition. This means that position data describing the position of the first vehicle and/or the position data describing the position of the second vehicle is/are associated with the data indicative of a friction condition having been received at the same time at which the position data has been received. This leads to a highly reliable association of the environment perception data.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, data interface, or the like.

According to a second aspect, there is provided a computer program comprising instructions which, when the program is executed by a computer, cause the computer to carry out the method of the present disclosure. Consequently, using the computer program, environment perception data of a first sensor may be associated with data indicative of a friction condition in a precise and reliable manner. This may be done automatically such that a high volume of associated environment perception data may be provided.

According to a third aspect, there is provided a computer-readable storage medium comprising instructions which, when executed by a computer, cause the computer to carry out the method of the present disclosure. Consequently, using the computer-readable storage medium, environment perception data of a first sensor may be associated with data indicative of a friction condition in a precise and reliable manner. This may be done automatically such that a high volume of associated environment perception data may be provided.

According to a fourth aspect, there is provided data processing apparatus comprising means for carrying out the method of the present disclosure. Thus, environment perception data of a first sensor may be associated with data indicative of a friction condition in a precise and reliable manner. This may be done automatically such that a high volume of associated environment perception data may be provided.

According to a fifth aspect, there is provided a system for associating environment perception data of a first sensor of a first vehicle with data indicative of a friction condition. The environment perception data represents at least a portion of a roadway. The system comprises:

- a first sensor being configured to be mounted on a first vehicle and being configured to provide the environment perception data,
- a position sensor being configured to detect a position of the first vehicle on the roadway,
- a second sensor being associated with the first vehicle and being configured to detect data indicative of a friction condition at a first position on the roadway,
- a data processing apparatus according to the present disclosure, wherein the data processing apparatus is communicatively connected to the first sensor, the position sensor and the second sensor.

Thus using such a system, environment perception data of a first sensor may be associated with data indicative of a friction condition in a precise and reliable manner. This may be done automatically such that a high volume of associated environment perception data may be provided.

It is noted that the data processing apparatus of the above system may be located in a vehicle, e.g. the first vehicle, or may be external to a vehicle, e.g. the first vehicle. In both cases, data collection and automatic association may happen separately. In the latter case, the data may be collected using a vehicle, e.g. a first vehicle, but the associations may be generated using data processing apparatus being external with respect to the vehicle, e.g. an offline system.

It is additionally noted that in a case in which the second sensor is located on a second vehicle, the first vehicle and the second vehicle do not necessarily need to communicate with each other. The respective data indicative of a friction condition and environment perception data may be collected separately and then may be processed in a computer system being external to both the first vehicle and the second vehicle in order to generate the associations. Again, an offline system may be used.

In an example, the second sensor comprises at least one of an infrared optical camera or a sensor wheel. Such sensors are able to provide data indicative of a friction condition of high precision and reliability.

As has been mentioned above, the first sensor may comprise an optical camera. In another example, the first sensor may comprise a lidar unit. In a further example, the first sensor may comprise a combination of an optical camera and a lidar unit.

In an example, the second sensor is configured to be mounted on the first vehicle, connected to the first vehicle or mounted on a second vehicle. Thus, the second sensor may be arranged in a spatially fixed relation to the first sensor, in a non-fixed, but interrelated spatial relation or without a specific spatial relation, i.e. spatially independent from the first sensor. In all cases, associations of high quality may be provided.

According to a sixth aspect, there is provided a vehicle comprising a system for associating environment perception data of a first sensor according to the present disclosure. Using such a vehicle, which may also be called a first vehicle, environment perception data of a first sensor may be associated with data indicative of a friction condition in a precise and reliable manner. This may be done automatically such that a high volume of associated environment perception data may be provided.

According to a seventh aspect, there is provided associated environment perception data being received by carrying out the method of the present disclosure. The association of such environment perception data with data indicative of a friction condition is of high quality.

According to an eighth aspect, there is provided a use of associated environment perception data of the present disclosure as training data or ground truth data for a machine learning unit or an artificial intelligence unit. The machine learning unit or the artificial intelligence unit is configured to estimate a friction coefficient from environment perception data of a first sensor. Artificial intelligence units and machine learning units having been trained by the associated environment perception data of the present disclosure are able to determine data indicative of a friction condition based on environment perception data. This may be done with high precision and reliability. Consequently, a vehicle which is only equipped with an environment detection sensor, but no dedicated second sensor, is able to determine data indicative of a friction condition based on the environment perception data of the environment detection sensor only. Knowing the data indicative of a friction condition enhances road safety.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.

Figure 1    shows a vehicle being equipped with a system for associating environment perception data according to a first example of the present disclosure, wherein the system comprises data processing apparatus, a computer-readable storage medium and a computer program according to the present disclosure and wherein the system is configured to carry out a method for associating environment perception data according to a first example of the present disclosure,

Figure 2    illustrates steps of the method for associating environment perception data according to the first example being executed using the system of Figure 1,

Figure 3    shows a vehicle being equipped with a system for associating environment perception data according to a second example of the present disclosure, wherein the system comprises data processing apparatus, a computer-readable storage medium and a computer program according to the present disclosure and wherein the system is configured to carry out a method for associating environment perception data according to a second example of the present disclosure,

Figure 4    illustrates steps of the method for associating environment perception data according to the second example being executed using the system of Figure 3,

Figure 5    shows a vehicle being equipped with a system for associating environment perception data according to a third example of the present disclosure, wherein the system comprises data processing apparatus, a computer-readable storage medium and a computer program according to the present disclosure and wherein the system is configured to carry out a method for associating environment perception data according to a third example of the present disclosure,

Figure 6    illustrates steps of the method for associating environment perception data according to the third example being executed using the system of Figure 5,

Figure 7    shows a vehicle being equipped with a system for associating environment perception data according to a fourth example of the present disclosure, wherein the system comprises data processing apparatus, a computer-readable storage medium and a computer program according to the present disclosure and wherein the system is configured to carry out a method for associating environment perception data according to the third example of the present disclosure,

Figure 8    illustrates a first variant of associated environment perception data being received by carrying out the method of the present disclosure, and

Figure 9    illustrates a second variant of associated environment perception data being received by carrying out the method of the present disclosure.

The figures are merely schematic representations and serve only to illustrate examples of the disclosure. Identical or equivalent elements are in principle provided with the same reference signs.

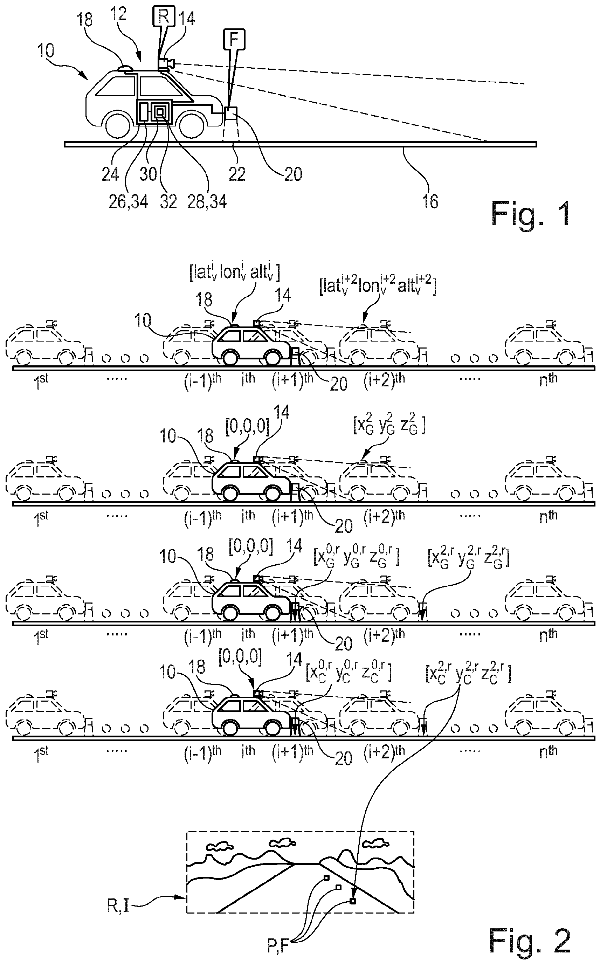

Figure 1 shows a vehicle 10 which may also be designated as a first vehicle.

The vehicle 10 is equipped with a system 12 for associating environment perception data R with data indicative of a friction condition F.

In the present example, the environment perception data R is provided by a first sensor 14 being an environment perception sensor.

The system 12 comprises a first sensor 14 which is mounted on the vehicle 10. It is noted that for illustrative purposes, the sensor 14 is illustrated on the roof of the vehicle 10. However, in reality, the sensor 14 may be arranged in any other suitable position of the vehicle 10.

In the present example, the first sensor 14 is a forward-facing first sensor 14.

The sensor 14 is configured to provide environment perception data R which represents at least a portion of a roadway 16 lying ahead of the vehicle 10.

In the example shown in Figure 1, the sensor 14 is an optical camera. The environment perception data of the sensor 14, thus, may be called an image.

The system 12 additionally comprises a position sensor 18. In the present example, the position sensor 18 is mounted on the vehicle 10. Again, for illustrative purposes only, the position sensor 18 is located on the roof of the vehicle 10. However, in reality, it may be located in any other suitable position of the vehicle 10.

The position sensor 18 is configured to detect a position of the vehicle 10 on the roadway 16.

Furthermore, the system 12 comprises a second sensor 20.

The second sensor 20 is configured to detect data indicative of a friction condition F at a first position 22 on the roadway 16.

In the present example, the second sensor 20 comprises an infrared optical camera. However, it is understood that any other suitable second sensor may be used as an alternative thereto. For example, instead of the infrared optical camera, a sensor wheel may be used.

In the present example, the second sensor 20 is rigidly attached to the vehicle 10.

For illustrative purposes, the second sensor 20 is mounted on a front bumper of the vehicle 10. However, it is understood that any other suitable position on the vehicle 10 may be chosen as an alternative.

The system 12 further comprises data processing apparatus 24.

The data processing apparatus 24 is communicatively connected to the first sensor 14, the position sensor 18 and the second sensor 20.

The data processing apparatus 24 comprises data processing unit 26 and data storage unit 28.

On the data storage unit 28, there is provided a computer-readable storage medium 30 which comprises a computer program 32. The computer program 32 and, thus, the computer-readable storage medium 30 comprise instructions which, when executed by the data processing unit 26 or, more generally, a computer, cause the data processing unit 26 or the computer to carry out a method for associating environment perception data R of a first sensor 14 with data indicative of a friction condition F.

Consequently, the data processing unit 26 and the data storage unit 28 form means 34 for carrying out the method for associating environment perception data R of a first sensor 14 with data indicative of a friction condition F.

In the following, a first example of the method will be explained in detail with reference to Figure 2. This example of the method is carried out using the system 12 of Figure 1.

In the first line of Figure 2, the vehicle 10 travels along the roadway 16. Selected positions that the vehicle 10 has while traveling along the roadway 16 are denoted as first to $n^{th}$ position. The positions may be counted using a counter i.

In a first step, the environment perception data R is received. The environment perception data R is provided by the first sensor 14 which in the present example is an optical camera. Consequently, here, the environment perception data R is an image I. It is noted that in reality, a stream of images I is received, however, the following explanation will be based on one single image only.

Additionally, position data describing a position of the vehicle 10 on the roadway 16 is received. To this end, the position sensor 18 is used.

The position data, comprises a component relating to a lateral position which for position i of the vehicle 10 is denoted $lat_v^i$. The position data also comprises a component relating to a longitudinal position which for position i of the vehicle 10 is denoted $lon_v^i$. Moreover, the position data comprises a component relating to an altitude position which for position i of the vehicle 10 is denoted $alt_v^i$.

Moreover, data indicative of a friction condition F from the second sensor 20 is received. As has been explained before, the data indicative of a friction condition F relates to the first position 22.

In the present example, the data indicative of a friction condition F is a friction coefficient.

The position data describing the position of the vehicle 10, and the received data indicative of a friction condition F relating to the first position 22 are time synchronized. This means that the position data and the data indicative of a friction condition F having been detected or captured at the same point in time are associated with one another. In a simplified manner, this may be imagined as generating a list, wherein the position data and the data indicative of a friction condition F having been detected or captured at the same time are written next to one another.

Subsequently, the first position 22 is transformed in a coordinate system being centered on the first sensor 14 using coordinate transformation based on the position data.

This is done in several steps.

First, a coordinate system being centered on the position sensor 18 generated. This is illustrated in the second line of Figure 2 wherein, the origin of this position sensor centered coordinate system is defined on the position sensor 18 when the vehicle 10 is in position i on the roadway 16.

The coordinates of the coordinate system being centered on the position sensor 18 are designated $x_G$, $y_G$ and $z_G$.

Consequently, following this coordinate transformation, the position of all parts of the vehicle 10 and the surroundings of the vehicle 10, including the first position 22, may be expressed using the coordinate system being centered on the position sensor 18.

In this context, the coordinates are denoted with the counter i relating to the position of the vehicle 10 on the roadway 16 as a superscript, e.g. for position i+2 the position of the position sensor 18 is expressed as $x_G^2, y_G^2, z_G^2$ (cf. second line of Figure 2).

The coordinates of the first position 22 may be expressed using an additional r in the superscript. Thus, for example $x_G^{2,r}, y_G^{2,r}, z_G^{2,r}$ at the position i+2 of the vehicle. This is illustrated in the third line of figure 2.

Based thereon, another coordinate transformation is performed. Now, a coordinate system with a center on the first sensor 14 is generated. This transformation is also performed while the vehicle is in position i.

The coordinates of the coordinate system being centered on the first sensor 14 are designated $x_C$, $y_C$ and $z_C$.

The coordinates of the first position 22 may again be expressed using the position counter i and an additional r in the superscript. Thus, for example $x_C^{2,r}, y_C^{2,r}, z_C^{2,r}$ at the position i+2 of the vehicle. This is illustrated in the fourth line of Figure 2.

Thus, the first position 22 is expressed in a coordinate system being centered on the first sensor 14.

Using intrinsics or a known configuration of the first sensor 14, the environment perception data R, i.e. the image I in the present example, may also be expressed in the coordinate system being centered on the first sensor 14. To this end, a calibration result of the first sensor 14 may be used.

Consequently, the first position 22 may be mapped onto a corresponding element P of the environment perception data R, i.e. the image I. This means that a point in the image I may be determined, which corresponds to the point for which the data indicative of a friction condition F has been detected by the second sensor 20. This element P may be associated with the data indicative of a friction condition F. In the bottom of figure 2, three example points P which have been associated with data indicative of a friction condition F respectively are shown.

In other words, environment perception data R being associated with data indicative of a friction condition F is received by carrying out the method for associated environment perception data R of a first sensor 14 with data indicative of a friction condition F.

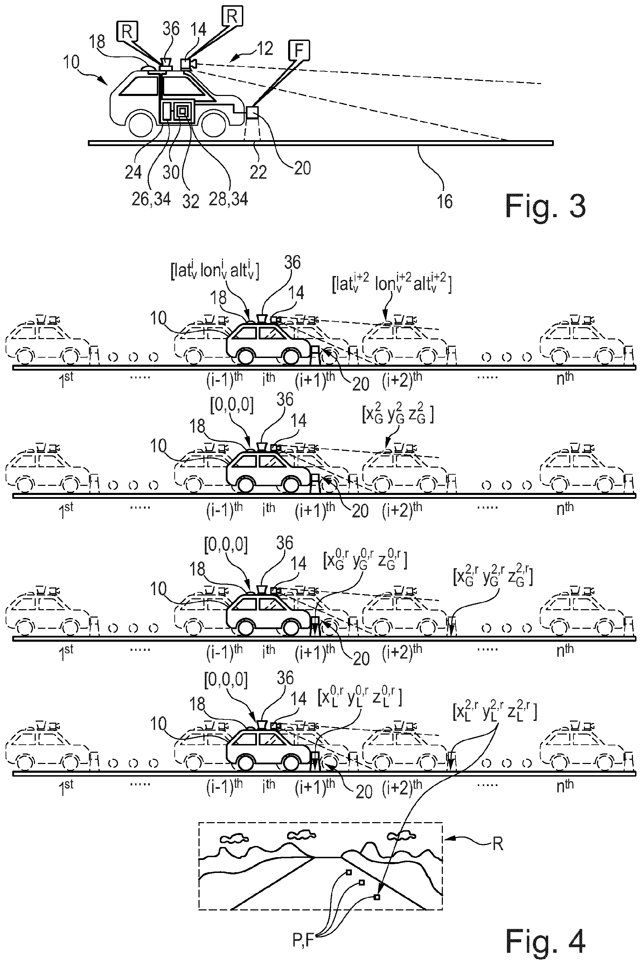

Figure 3 shows the vehicle 10 which now is equipped with a system 12 for associated environment perception data R of a first sensor 14, 36 with data indicative of a friction condition F according to a second example. In the following, only the differences with respect to the first example will be explained.

In the second example, the system 12 comprises a supplementary first sensor 36.

In the present example, the supplementary first sensor 36 is a forward-facing first sensor 36.

The supplementary first sensor 36 is also communicatively connected to the data processing apparatus 24.

In the present example, the first sensor 14 may be an optical camera. The supplementary first sensor 36 may be a lidar unit.

Using the data processing apparatus 24 and its components, a second example of the method can be carried out. This will be explained in detail with reference to Figure 4. Again, only the differences with respect to the first example of the method will be explained.

In the second example, a coordinate system with a center on the supplementary first sensor 36 is generated and a coordinate transformation is performed based on the coordinate system being centered on the position sensor 18. Again, the transformation is performed while the vehicle is in position i.

The coordinates of the coordinate system being centered on the supplementary first sensor 36 are designated $x_L$, $y_L$ and $z_L$.

Thus, the coordinates of the first position 22 may be expressed using the position counter i and an additional r in the superscript. Thus, for example $x_L^{2,r}, y_L^{2,r}, z_L^{2,r}$ at the position i+2 of the vehicle. This is illustrated in the fourth line of Figure 4.

Thus, the first position 22 is expressed in a coordinate system being centered on the supplementary first sensor 36.

As has been explained before, using intrinsics or a known configuration of the first sensor 14 the environment perception data R, i.e. the image I in the present example, may be expressed in the coordinate system being centered on the first sensor 14.

Now, another coordinate transformation is performed and the environment perception data R of the first sensor 14 is expressed in the coordinate system being centered on the supplementary first sensor 36. This is possible since the field of view of both the first sensor 14 and the supplementary first sensor 36 are known. Additionally, the spatial distance between the first sensor 14 and the supplementary first sensor 36 is known. In other words, the transformation between the first sensor 14 and the supplementary first sensor 36 is known. The transformation comprises both rotation and translation.

Thus, the environment perception data R as represented in the bottom of figure 4 in fact is a combination of the environment perception data R of the first sensor 14 and the environment perception data R of the supplementary first sensor 36. The association may be performed as has already been explained in connection with Figure 2.

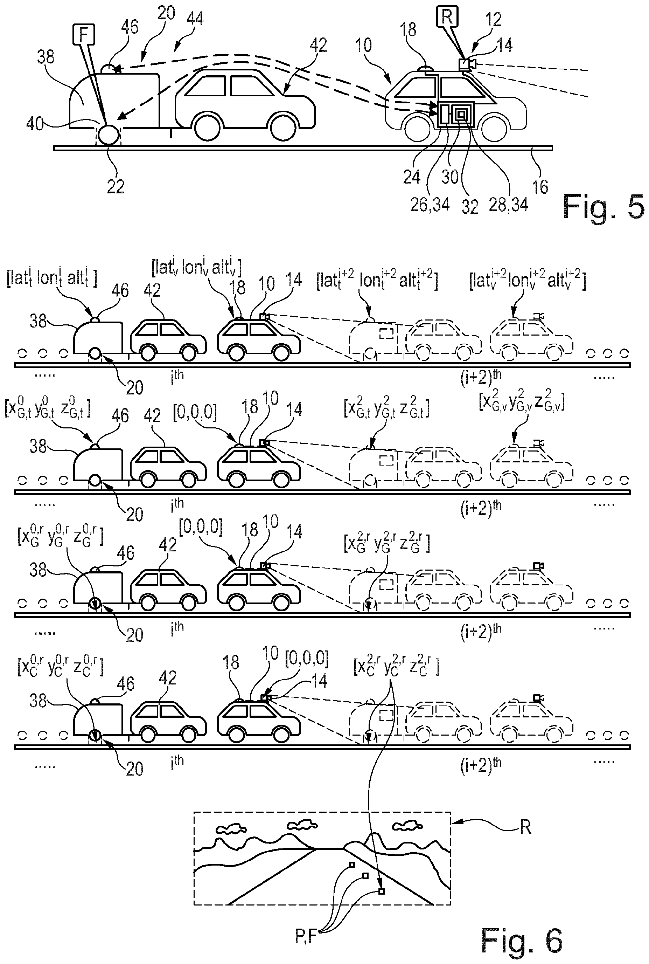

Figure 5 shows the vehicle 10 which now is equipped with a system 12 for associating environment perception data R of a first sensor 14 with data indicative of a friction condition F according to a third example. In the following, only the differences with respect to the first and second examples will be explained.

In the third example, the second sensor 20 is associated with the vehicle 10, but not directly mounted on the vehicle 10. In the example shown in Figure 5, the second sensor 20 has the form of a friction trailer 38 which is configured to detect data indicative of a friction condition F using a detector wheel 40. The friction trailer 38 is towed by a supplementary vehicle 42 which is separate from the vehicle 10.

The friction trailer 38 may also be called a second vehicle 44. In contrast thereto, as has already been explained above, the vehicle 10 is called a first vehicle 10.

On the friction trailer 38, there is mounted a supplementary position sensor 46 being configured to detect a position of the friction trailer 38 or, more generally speaking, the second vehicle 44.

It is noted that in the present example, the second vehicle 44 and especially the second sensor 20 having the form of a friction trailer 38 form part of the system 12 for associating environment perception data R of a first sensor 14 with the data indicative of a friction condition F.

The second sensor 20 and the supplementary position sensor 46 are communicatively connected to the data processing apparatus 24 via a wireless connection. As has been mentioned before this wireless connection is an option. It is also possible to carry out the method without such a connection, i.e. without a communication connection between the first vehicle 10 and the second vehicle 44.

Using the system 12 of Figure 5, the third example of the method for associating environment perception data R of a first sensor 14 with data indicative of a friction condition F may be carried out.

This will be explained in connection with Figure 6. As before, only the differences with respect to the examples of the methods that have already been explained before, will be mentioned.

In the third example, not only a position of the vehicle 10, but also a position of the friction trailer 38 are received. This is shown in the first line of Figure 6.

The position data relating to the friction trailer 38, comprises a component relating to a lateral position which for position i is denoted $lat_t^i$. The position data also comprises a component relating to a longitudinal position which for position i of the friction trailer 38 is denoted $lon_t^i$. Moreover, the position data comprises a component relating to an altitude position which for position i of the friction trailer 38 is denoted $alt_t^i$.

Based thereon, as in the previous examples, a coordinate system is generated which is centered on the position sensor 18 of the vehicle 10.

The position of the supplementary position sensor 46 can be expressed in the coordinate system being centered on the position sensor 18. This is shown in the second line of Figure 6.

The remaining method steps are the same as in the first example of the method as has been explained in connection with Figure 2.

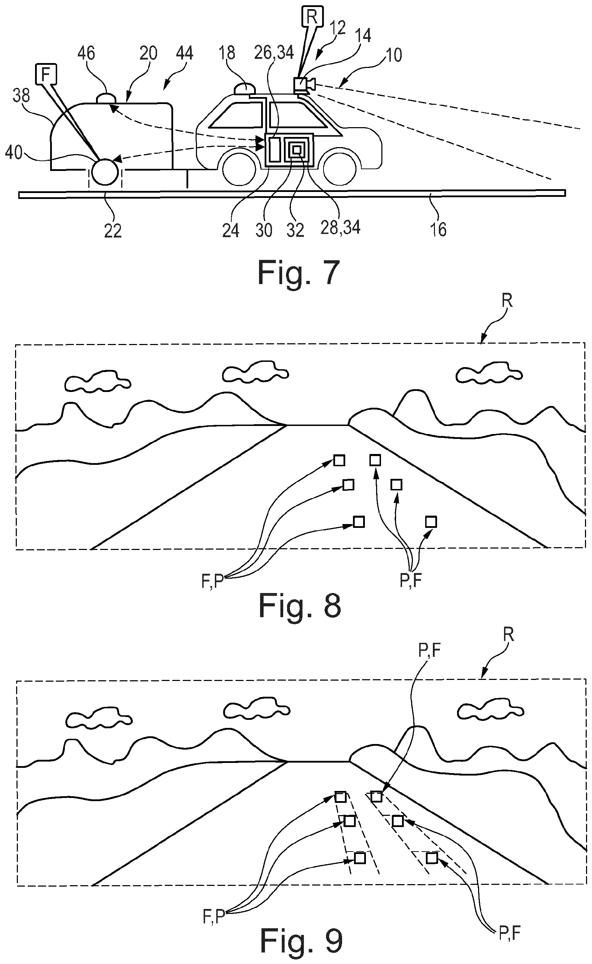

Figure 7 shows the vehicle 10 which now is equipped with a system 12 for associating environment perception data R of a first sensor 14 with data indicative of a friction condition F according to a fourth example. In the following, only the differences with respect to the first and second example will be explained.

Fourth example can be considered to be a variant of the third example.

Now the friction trailer 38 is directly attached to the vehicle 10. Again, the friction trailer 38 may be designated as a second vehicle 44.

The system 12 according to the fourth example may also be used to carry out a method for associating environment perception data R of a first sensor 14 with the data indicative of a friction condition F.

More precisely, the method according to the third example which has been explained in connection with Figure 6 may also be carried out using the system 12 of Figure 7.

It is noted, that the examples of the system 12 for associating environment perception data R of a first sensor 14 with the data indicative of a friction condition F and the examples of a method for associating environment perception data R of a first sensor 14 with the data indicative of a friction condition F as mentioned above may be combined.

In this context, the example of Figures 3 and 4, i.e. the example using the supplementary first sensor 36, may be combined with the example of Figures 5 and 6, i.e. the example using a second vehicle 44 comprising a friction trailer 38 being towed by the supplementary vehicle 42.

Moreover, the example of Figures 3 and 4, i.e. the example using the supplementary first sensor 36, may be combined with the example of Figure 7, i.e. the example using a friction trailer 38 being attached to the vehicle 10.

Using any one of the above-mentioned examples, associated environment perception data R is generated. Examples of such environment perception data R are shown in Figures 8 and 9.

In both examples, example elements P are shown which have been associated with the data indicative of a friction condition F, for example a friction coefficient.

In the example of Figure 9, additionally the subsets of the environment perception data are marked which correspond to portions of the roadway 16 which have been covered by the second sensor 20. This may be best understood if it is assumed that the second sensor 20 has the form of a friction trailer 38, which of course is only one of several possibilities. The friction trailer 38 has a detector wheel 40 detecting the data indicative of a friction condition F. The detector wheel 40 travels along a certain path. This path is the same as the subset which is covered by the second sensor 20.

The associated environment perception data R as shown in Figure 8 or Figure 9 may be used as training data or ground truth data for a machine learning unit or an artificial intelligence unit.

After having been trained, such a machine learning unit or artificial intelligence unit is configured to estimate a friction coefficient from environment perception data of a first sensor being similar to the first sensors 14, 36.

Since the association is performed with high precision and reliability, the resulting training data or ground truth data is of high quality. Consequently the estimation of data indicative of a friction condition F from environment perception data of a first sensor being performed by the machine learning unit or the artificial intelligence unit is highly reliable and accurate.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

LIST OF REFERENCE SIGNS

10   vehicle, first vehicle
12   system for associating environment perception data with data indicative of a friction condition
14   first sensor
16   roadway
18   position sensor
20   second sensor
22   first position
24   data processing apparatus
26   data processing unit
28   data storage unit
30   computer-readable storage medium
32   computer program
34   means for carrying out the method for associating environment perception data with data indicative of a friction condition

36  supplementary first sensor
38  friction trailer
40  detector wheel
42  supplementary vehicle
44  second vehicle
46  supplementary position sensor

R  environment perception data
I  image
i  counter of positions of the vehicle on the roadway
F  data indicative of a friction condition
P  element of the environment perception data

**Claims**

1. A method for associating environment perception data (R) of a first vehicle (10) with data indicative of a friction condition (F), wherein the environment perception data (R) represent at least a portion of a roadway (16), the method comprising:

  - receiving the environment perception data (R) from a first sensor (14, 36),
  - receiving position data describing a position of the first vehicle (10) on the roadway (16),
  - receiving data indicative of a friction condition (F) from a second sensor (20) being associated with the first vehicle (10) and relating to a first position (22),
  - transforming the first position (22) in a coordinate system being centered on the first sensor (14, 36) using coordinate transformation based on the position data describing the position of the first vehicle (10),
  - mapping the first position (22) onto at least one corresponding element (P) of the environment perception data (R), and associating the at least one element (P) with the data indicative of a friction condition (F) relating to the first position (22).

2. The method of claim 1, wherein transforming the first position (22) in a coordinate system being centered on the first sensor (14, 36) comprises transforming the first position (22) in a coordinate system being centered on a position sensor (18) of the first vehicle (10) using coordinate transformation based on the position data describing the position of the first vehicle (10).

3. The method of claim 1 or 2, further comprising receiving position data describing a position on the roadway (16) of a second vehicle (44) carrying the second sensor (20), the second vehicle (44) being associated with the first vehicle (10), and transforming the position of the second vehicle (44) in a coordinate system being centered on a position sensor (18) of the first vehicle (10) using coordinate transformation based on the position data describing the position of the second vehicle (44) and the position data describing the position of the first vehicle (10).

4. The method of any one of the preceding claims, further comprising receiving environment perception data (R) from two distinct first sensors (14, 36) respectively, and expressing the environment perception data (R) of one of the two distinct first sensors (14, 36) in a coordinate system being centered on the respective other first sensor (14, 36).

5. The method of any one of the preceding claims, further comprising marking a subset of the environment perception data (R) corresponding to a portion of the roadway (16) which has been covered by the second sensor (20).

6. The method of any one of the preceding claims, comprising time synchronizing the position data describing the position of the first vehicle (10) and/or the position data describing the position of the second vehicle (44) with the received data indicative of a friction condition (F).

7. A computer program (32) comprising instructions which, when the program is executed by a computer, cause the computer to carry out the method of claims 1 to 6.

8. A computer-readable storage medium (30) comprising instructions which, when executed by a computer, cause the computer to carry out the method of claims 1 to 6.

9. A data processing apparatus (24) comprising means (34) for carrying out the method of any one of claims 1 to 6.

10. A system (12) for associating environment perception data (R) of a first vehicle (10) with data indicative of a friction condition (F), wherein the environment perception data (R) represent at least a portion of a roadway (16), comprising:

  - a first sensor (14, 36) being configured to be mounted on a first vehicle (10) and being configured to provide the environment perception data (R),
  - a position sensor (18) being configured to detect a position of the first vehicle (10) on the roadway (16),
  - a second sensor (20) being associated with the first vehicle (10) and being configured to detect data indicative of a friction condition (F) at a first position (22) on the roadway (16),
  - a data processing apparatus (24) according to claim 9, wherein the data processing apparatus (24) is communicatively connected to the first sensor (14, 36), the position sensor (18) and the second sensor (20).

11. The system (12) of claim 10, wherein the second sensor (20) comprises at least one of an infrared optical camera or a sensor wheel (40).

12. The system (12) of claim 10 or 11, wherein the second sensor (20) is configured to be mounted on the first vehicle (10), connected to the first vehicle (10) or mounted on a second vehicle (44).

13. A vehicle (10) comprising a system (12) of any one of claims 10 to 12.

14. Associated environment perception data (R) being received by carrying out the method of at least one of claims 1 to 6.

15. A use of associated environment perception data (R) of claim 14 as training data or ground truth data for a machine learning unit or an artificial intelligence unit, wherein the machine learning unit or the artificial intelligence unit is configured to estimate a friction coefficient from environment perception data.

Fig. 1

Fig. 2

Fig. 3

Fig. 4

Fig. 5

Fig. 6

Fig. 7

Fig. 8

Fig. 9

Europäisches
Patentamt

European
Patent Office

Office européen
des brevets

# EUROPEAN SEARCH REPORT

**Application Number**

EP 23 16 3470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/176408 A1 (LYNCH JAMES D [US]) 23 June 2016 (2016-06-23) * the whole document * ----- | 1-15 | INV. G06V20/56 |
| A | US 2016/368504 A1 (KIEREN MARTIN [DE] ET AL) 22 December 2016 (2016-12-22) ----- | 1 | |

**TECHNICAL FIELDS SEARCHED (IPC)**

G06V

The present search report has been drawn up for all claims

| Place of search | Date of completion of the search | Examiner |
|---|---|---|
| The Hague | 31 May 2023 | Versluis, Anton |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 3470

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2023

| Patent document cited in search report | | Publication date | Patent family member(s) | | Publication date |
|---|---|---|---|---|---|
| US 2016176408 | A1 | 23-06-2016 | EP 3037314 A1 | | 29-06-2016 |
| | | | US 2016176408 A1 | | 23-06-2016 |
| US 2016368504 | A1 | 22-12-2016 | DE 102015211482 A1 | | 22-12-2016 |
| | | | US 2016368504 A1 | | 22-12-2016 |

EPO FORM P0459

For more details about this annex : see Official Journal of the European Patent Office, No. 12/82